(19) Europäisches Patentamt
European Patent Office
Office européen des brevets

(11) **EP 4 245 800 A1**

(12) **EUROPEAN PATENT APPLICATION**

(43) Date of publication:
**20.09.2023 Bulletin 2023/38**

(21) Application number: **23158766.8**

(22) Date of filing: **27.02.2023**

(51) International Patent Classification (IPC):
**C08J 9/00** (2006.01)      **C08J 9/12** (2006.01)
**C08L 67/04** (2006.01)      **C08J 9/14** (2006.01)
**C08G 18/42** (2006.01)      **C08G 59/42** (2006.01)

(52) Cooperative Patent Classification (CPC):
**C08J 9/122; C08G 18/428; C08G 59/4276;**
**C08J 9/0061; C08J 9/141;** C08G 2110/0041;
C08J 2201/024; C08J 2201/026; C08J 2201/03;
C08J 2203/06; C08J 2203/14; C08J 2363/00;
C08J 2367/04; C08J 2375/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.03.2022 JP 2022039868**

(71) Applicant: **Ricoh Company, Ltd.**
**Tokyo 143-8555 (JP)**

(72) Inventors:
• **TAMURA, Risa**
  **Tokyo, 143-8555 (JP)**
• **NEMOTO, Taichi**
  **Tokyo, 143-8555 (JP)**
• **OGAWA, Satoshi**
  **Tokyo, 143-8555 (JP)**

(74) Representative: **Marks & Clerk LLP**
**15 Fetter Lane**
**London EC4A 1BW (GB)**

(54) **ALIPHATIC POLYESTER RESIN COMPOSITION, FOAMED SHEET, METHOD OF MANUFACTURING FOAMED SHEET, AND MANUFACTURED MATTER**

(57)     An aliphatic polyester resin composition contains an aliphatic polyester resin and a cross-linking agent, wherein the proportion of the gel proportion of the aliphatic polyester resin composition is less than 5 percent, wherein the weight average molecular weight of the aliphatic polyester resin composition after the aliphatic polyester resin composition is melted at 200 degrees C for 10 minutes increases by 50,000 or greater compared to the weight average molecular weight of the aliphatic polyester resin composition before the aliphatic polyester resin composition is melted at 200 degrees C for 10 minutes.

EP 4 245 800 A1

**Description**

BACKGROUND

Technical Field

The present disclosure relates to an aliphatic polyester resin composition, a foamed sheet, a method of manufacturing a foamed sheet, and manufactured matter.

Description of the Related Art

Plastic is readily processed to have product forms and is widely available on the market. foamed sheets made of plastic compositions are cushioning and widely used as raw materials for resin molding products such as bags and containers. These foamed sheets are conducive to reducing the cost and weight by limiting the amount of resin used. foamed sheets are made of materials such as thermoplastic resin, including polystyrene resin, polyolefin resin, and polyester resin.

Biodegradable plastics readily decomposed in the natural world have been actively developed to substitute materials for foamed sheets considering rising environmental awareness.

Of the biodegradable plastics, polylactic acid is biodegradable and demonstrates features similar to those of typically used plastic, such as polystyrene. Polylactic acid has a high melting point, robustness, and chemical resistance compared to other biodegradable plastics and has become a prospect as a material for foamed sheets.

Aliphatic polyester, including polylactic acid, softens at heating and quickly turns into a low sticky liquid. It is challenging to produce a sheet with a high expansion ratio from this sticky liquid because it has a small range of melting viscosity suitable for foaming.

One way of manufacturing a foamed sheet of polylactic acid has been proposed in Japanese Unexamined Patent Application Publication No. 2020-180252. This proposal involves a problem of creating a foamed sheet with a low expansion ratio because the foamed sheet is produced without a cross-linking agent. To make a foamed sheet with a high expansion ratio, the molecular weight of polylactic acid needs to increase using a cross-linking agent.

However, adding a cross-linking agent to an aliphatic polyester resin composition is not sufficient to disperse sufficiently the agent in the composition. This insufficient dispersion prevents uniform cross-linking reaction. Resultantly, the thus-obtained foamed sheet has different expansion ratios at different portions. Such a non-uniform foamed sheet is weak to heat and shock, resulting in deformation of the foam. Striking a balance between a high expansion ratio and uniformity is extremely difficult.

SUMMARY

According to the present disclosure, an aliphatic polyester resin composition is provided with which a foamed sheet with a uniform expansion ratio can be produced.

According to embodiments of the present disclosure, an aliphatic polyester resin composition is provided which contains an aliphatic polyester resin and a cross-linking agent, wherein the proportion of the gel proportion of the aliphatic polyester resin composition is less than 5 percent, wherein the weight average molecular weight of the aliphatic polyester resin composition after the aliphatic polyester resin composition is melted at 200 degrees C for 10 minutes increases by 50,000 or greater compared to the weight average molecular weight of the aliphatic polyester resin composition before the aliphatic polyester resin composition is melted at 200 degrees C for 10 minutes.

As another aspect of embodiments of the present disclosure, a foamed sheet obtained by foaming the aliphatic polyester resin composition mentioned above.

As another aspect of embodiments of the present disclosure, a method of manufacturing the foamed sheet mentioned above is provided which contains kneading the aliphatic polyester resin and the cross-linking agent at a temperature lower than the melting point of the aliphatic polyester resin under the presence of a compressive fluid to obtain the aliphatic polyester resin composition and foaming the aliphatic polyester resin composition in removing the compressive fluid from the aliphatic polyester resin composition.

As another aspect of embodiments of the present disclosure, a manufactured matter is provided which includes the foamed sheet mentioned above.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a phase graph illustrating the state of a material against temperature and pressure;
FIG. 2 is a phase graph for defining the range of compressive fluid;
FIG. 3 is a schematic diagram illustrating an example of the device for continuous kneading;
FIG. 4 is a schematic diagram illustrating an example of the device for continuously fabricating a foamed sheet; and
FIG. 5 is a flowchart illustrating an example of the method of manufacturing a foamed sheet.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Aliphatic Polyester Resin Composition

The aliphatic polyester resin composition of the present disclosure contains an aliphatic polyester resin, a cross-linking agent, wherein the proportion of the gel proportion of the aliphatic polyester resin composition is less than 5 percent, wherein the weight average molecular weight of the aliphatic polyester resin composition after the aliphatic polyester resin composition is melted at 200 degrees C for 10 minutes increases by 50,000 or greater compared to the weight average molecular weight of the aliphatic polyester resin composition before the aliphatic polyester resin composition is melted at 200 degrees C for 10 minutes. The aliphatic polyester resin composition may furthermore optionally contain other components.

The aliphatic polyester resin composition contains an aliphatic polyester resin as the main component. "Main component" means that although the aliphatic polyester resin composition may contain additives, including a cross-linking agent and a filler, the aliphatic polyester resin accounts for the maximum proportion of the aliphatic polyester resin composition. The proportion of the aliphatic polyester resin in an aliphatic polyester resin composition is preferably 50 percent by mass or greater, more preferably 80 percent by mass or greater, and furthermore preferably 90 percent by mass or greater. Considering that the aliphatic polyester resin composition is heated and mixed with carbon dioxide during manufacturing, this manufacturing is not completely free of chemical reaction. However, the cross-linking agent contained in the aliphatic polyester resin composition does not react (cross-linking reaction has not occurred yet).

An aliphatic polyester resin composition in classical technology does not contain a cross-linking agent. A suitably sticky aliphatic polyester resin composition is not thus obtained by increasing the molecular weight by cross-linking the resin. Therefore, producing a foamed sheet with a uniform expansion ratio is difficult because the weight average molecular weight of the aliphatic polyester resin composition does not increase by 50,000 or greater after the aliphatic polyester resin composition is melted at 200 degrees C for 10 minutes compared to the weight average molecular weight of the aliphatic polyester resin composition before the aliphatic polyester resin composition is melted at 200 degrees C for 10 minutes.

The aliphatic polyester resin composition of the present disclosure contains an aliphatic polyester resin, a cross-linking agent, wherein the proportion of the gel proportion of the aliphatic polyester resin composition is less than 5 percent, wherein the weight average molecular weight of the aliphatic polyester resin composition after the aliphatic polyester resin composition is melted at 200 degrees C for 10 minutes increases by 50,000 or greater compared to the weight average molecular weight of the aliphatic polyester resin composition before the aliphatic polyester resin composition is melted at 200 degrees C for 10 minutes. Since the cross-linking agent entirely or partially remains unreacted inside the aliphatic polyester resin composition, cross-linking reaction proceeds by melting the aliphatic polyester resin composition at high temperatures. This aliphatic polyester resin composition is suitably used as a master batch (resin precursor) for manufacturing a foamed sheet.

"The aliphatic polyester resin composition before melting" is not melted yet, contains the aliphatic polyester resin and the cross-linking agent, and the proportion of its gel portion is less than 5 percent.

"The aliphatic polyester resin composition after melting" is obtained after melting "the aliphatic polyester resin composition before melting" at 200 degrees C for 10 minutes.

The weight average molecular weight of the aliphatic polyester resin composition after melting increasing by 50,000 or greater compared to that before melting can be paraphrased as "a resin composition still having a capacity for increasing the weight average molecular weight by 50,000 or greater". In other words, it is "a resin composition containing a cross-linking agent that has not proceeded cross-linking reaction." In general, a resin softens by heating at high temperatures to knead a cross-linking agent into the resin. Cross-linking reaction progresses by the cross-linking agent heated at high temperatures. If the resin is heated after the cross-linking reaction completes, the resin has no capacity for increasing its weight average molecular weight by 50,000 or greater. Thus, it is desirable to knead an unreacted cross-linking agent into a resin at temperatures as low as possible. Resin can soften at low temperatures using a compressive fluid, thereby obtaining a resin composition with a capacity for cross-linking reaction.

In the present disclosure, a master batch containing an aliphatic polyester resin composition in which an unreacted cross-linking agent is uniformly dispersed in advance is used to accelerate the progress of the cross-linking reaction by raising the temperature in the process of manufacturing a foamed sheet. t this point, the cross-linking agent uniformly dispersed in the aliphatic polyester resin composition forms a cross-linking point, progressing uniform polymerization. Resultantly, a uniform foamed sheet with a high expansion ratio can be obtained.

The master batch is a resin particle or pellet of an aliphatic polyester resin composition in which a cross-linking agent is dispersed. A foamed sheet obtained using a master batch containing a cross-linking agent in which a cross-linking agent is dispersed in advance enhances the dispersibility of the cross-linking agent in the foamed sheet.

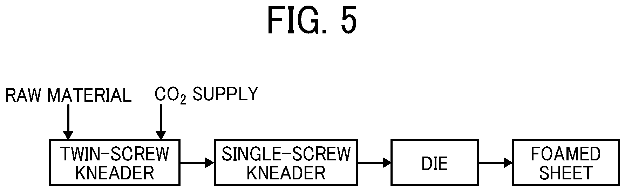

In the present disclosure, as illustrated in FIG. 5, if a master batch containing a cross-linking agent is used, the cross-linking agent is already dispersed in a resin when raw materials, including polylactic acid, a cross-linking agent, and a filler, are placed in a twin screw kneading machine or kneader. The cross-linking reaction uniformly progresses during kneading, thereby obtaining a uniform foamed sheet with a high expansion ratio.

Aliphatic Polyester Resin

The resin for use in the present disclosure is not particularly limited and can be suitably selected to suit to a particular application as long as it is an aliphatic polyester resin.

Specific examples include, but are not limited to, homopolymers of lactic acid, copolymers of lactic acid with other hydroxycarboxylic acids such as glycolic acid, 3-hydroxybutyric acid, 4-hydroxybutyric acid, 4-hydroxyvaleric acid, 5-hydroxyvaleric acid, and 6-hydroxycaproic acid, copolymers of lactic acid with aliphatic carboxylic acids and glycols, and mixtures of polylactic acid with other polyhydroxy carboxylic acids and polycaprolactone. These can be used alone or in combination.

Aliphatic polyester resins can be synthesized from alcohol components or their derivatives and acid components or their derivatives or can be procured.

Of these, highly biodegradable aliphatic polyester resins, which are decomposed in the natural world, are particularly preferable in terms of the burden on the environment.

Specific examples of the biodegradable aliphatic polyester resins include, but are not limited to, polylactic acid, polyglycol acid, poly(3-hydroxy butylate), poly(3-hydroxybutylate·3-hydroxyhexanoate), poly(3-hydroxy butylate·3-hydroxy parylate), polycaprolactone, polybutylene succinate, and poly(butylene succinate·adipate). These can be used alone or in combination. Of these, polylactic acid is particularly preferable because the acid is plant-derived resin and demonstrates features similar to those of typically used plastic, such as polystyrene. In addition, polylactic acid has a high melting point, robustness, transparency, and chemical resistance compared to other biodegradable polymers. The proportion of the polylactic acid is preferably 90 percent by mass or greater.

Polylactic Acid

Examples of the polylactic acid include, but are not limited to, a copolymer of D-lactic acid and L-lactic acid, a homopolymer of either D-lactic acid (D-form) or L-lactic acid (L-form), and a ring-opening polymer of at least one type of lactide selected from the group consisting of D-lactide (D-form), L-lactide (L-form), and DL-lactide. These can be used alone or in combination. Polylactic acid can be suitably synthesized or procured.

The ratio of the D-form to the L-form of the lactic acid constituting a polylactic acid is not particularly limited.

Preferably, either the D-form or the L-dorm constituting the polylactic acid accounts for 95 mol percent or greater of the polylactic acid. Polylactic acid formed of either the D-form optical isomer or the L-form optical isomer can be used. Polylactic acid in this range demonstrates high crystallinity. Foamed sheets manufactured from such polylactic acid are expected to have good heat resistance and are suitable for goods relating to foods.

Whether either the D-form optical isomer or the L-form optical isomer of lactic acid constituting polylactic acid in an aliphatic polyester resin composition or a foamed sheet accounts for 95 mol percent of the polylactic acid can be confirmed by analysis utilizing liquid chromatography using an optically active column.

The measuring process is as follows:

An aliphatic polyester resin composition or a foamed sheet is subjected to frost shattering. A total of 200 mg of the obtained powder of the aliphatic polyester resin composition or the foamed sheet is taken to a triangle flask, followed by adding 30 mL of 1 normal sodium hydroxide. Next, the triangle flask is heated to 65 degrees C while being shaken to completely dissolve polylactic acid. Subsequently, the pH of the solution obtained was adjusted to from 4 to 7 using 1 normal hydric acid. The solution is diluted to a particular volume using a volumeric flask to obtain a polylactic acid solution.

Next, the polylactic acid solution is filtered with a 0.45 $\mu$m membrane filter, followed by analysis using liquid chromatography. Based on the chart obtained, the area ratio is calculated from the peaks derived from the D-form and L-form. The amount of the D-form and the amount of the L-form are calculated from this presence ratio. This operation mentioned above is repeated three times and the results are averaged. The average is determined as the amount of D-form and the amount of L-form of the lactic acid constituting the polylactic acid in an aliphatic polyester resin composition or a foamed sheet.

The device and the conditions for measuring are as follows.

· HPLC device (liquid chromatography: PU-2085 Plus System, manufactured by JASCO Corporation
· Column: SUMI CHIRALOA 5000, 4.6 mm $\varphi \times$ 250 mm, manufactured by Sumika Chemical Analysis Service, Ltd.
· Column temperature: 25 degrees C
· Mobile phase: Liquid mixture of aqueous solution of 2 mM $CuSO_4$ and 2-propanol at a volume ratio of 95 : 5
· Rate of flow of mobile phase: 1.0 mL/minute
· Detector: UV 254 nm
· Amount of infusion: 20 $\mu$L

An aliphatic polyester resin composition or a foamed sheet is subjected to the measuring mentioned above. If the larger of the peak area of the D-form and the peak area of the L-form accounts for 95 percent or greater to the entire of the peak areas derived from the D-form and L-form, the proportion of either the D-form or the L-form constituting polylactic acid is 95 mol percent or greater of the polylactic acid.

Cross-linking Agent

The cross-linking agent is not particularly limited and can be suitably selected to suit to a particular application as long as the agent is a reactive polyvalent compound with the functional group in an aliphatic polyester resin. At least one of an epoxy compound and an isocyanate compound is preferable and an epoxy compound is more preferable.

A foamed sheet manufactured using an aliphatic polyester resin composition containing such a cross-linking agent reduces the merger and breaking of foams, which leads to enhancing the expansion ratio.

As the epoxy compounds, (meth)acrylic-styrene-based cross-linking agents having epoxy functionality including two or more epoxy groups in their molecule are preferable. Moreover, (meth)acrylic-styrene-based cross-linking agents having epoxy functionality including three or more epoxy groups in their molecule are more preferable to enhance efficiently the melt strength, thereby reducing the residue of unreacted matter.

A (meth)acrylic-styrene-based cross-linking agent including two or more epoxy groups in a molecule with epoxy functionality is obtained by copolymerizing a polymer of (meth)acrylic monomer with an epoxy group and a styrene monomer.

Specific examples of the (meth)acrylic monomers with an epoxy group include, but are not limited to, monomers with a 1,2-epoxy group such as glycidyl acrylate and glycidyl methacrylate.

Specific examples of the styrene monomers include, but are not limited to, styrene and $\alpha$-methyl styrene.

The epoxy-functional (meth)acrylic-styrene-based cross-linking agent with two or more epoxy groups in a molecule may contain a (meth)acrylic monomer without an epoxy group in its copolymerization component. Specific examples of such a (meth)acrylic monomer include, but are not limited to, methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate.

The apparent epoxy equivalent of the aliphatic polyester resin composition obtained after melting is preferably 30,000 g/mol or less, 10,000 g/mol or less, and furthermore preferably 5,000 g/mol or less. The smaller the apparent epoxy equivalent of an aliphatic polyester resin composition after melting, the higher the concentration of cross-linkable epoxy groups. Using such an aliphatic polyester resin composition as a master batch of a foamed sheet is thus likely to achieve a high expansion ratio.

The apparent epoxy equivalent of an aliphatic polyester resin composition obtained after melting can be calculated from the proportion of the materials prepared by the following method.

The apparent epoxy equivalent refers to an aliphatic polyester composition's weight (g/mol) containing epoxy groups equivalent to 1 mol. For example, the apparent epoxy equivalent of an aliphatic polyester composition produced by kneading an epoxy-based cross-linking agent with an epoxy equivalent of x (g/mol) to achieve a proportion of the agent of 1 percent by mass is 100x (g/mol).

At this point, since the proportions of the materials at the time when an aliphatic polyester resin composition is charged are used, it does not matter whether the epoxy groups are present in the form of epoxy groups or cross-linking reaction progresses after ring-opening.

As the isocyanate compounds, polyisocyanates with two or more isocyanate groups in their molecule are preferable. Moreover, polyisocyanates with three or more isocyanate groups in their molecule are more preferable to reduce the residue of unreacted matter by introducing a branched structure into a resin to enhance the melt strength efficiently.

Specific examples of the polyisocyanate with two or more isocyanate groups in the molecule include, but are not limited to, aliphatic diisocyanates such as 1,6-hexamethylene diisocyanate, 3-isocyanatomethyl-3,5,5-trimethylcyclohexyl isocyanate (isophorone diisocyanate), 1,4-tetramethylene diisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanato)methylcyclohexane, tetramethylxylylene diisocyanate, transcyclohexane-1,4-diisocyanate, and lysine diisocyanate; alicyclic polyisocyanates such as isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate; aromatic diisocyanates such as 2,4-toluylene diisocyanate, 2,6-toluylene diisocyanate, diphenylmethane-4, 4'-isocyanate, 1,5'-naphthene diisocyanate, tolidine diisocyanate, diphenylmethylmethane diisocyanate, tetraalkyldiphenylmethane diisocyanate, 4,4'-dibenzyl diisocyanate, and 1,3-phenylene diisocyanate; triisocyanate compounds such as lysine ester triisocyanate, triphenylmethane triisocyanate, 1,6,11-undecane triisocyanate, 1,8-isocyanato-4,4-isocyanatomethyloctane, 1,3,6- hexamethylene triisocyanate, bicycloheptane triisocyanate, an adduct of trimethylolpropane and 2,4-toluylene diisocyanate, and an adduct of trimethylolpropane and diisocyanate such as 1,6-hexamethylene diisocyanate; and modified polyisocyanate compounds obtained by reacting polyhydric alcohols such as glycerin and pentaerythritol with the aliphatic and aromatic diisocyanate compounds or the triisocyanate compounds. These can be used alone or in combination.

As the cross-linking agents, other cross-linking agents can be used in addition to at least one of an epoxy compound and an isocyanate compound.

Examples of the other cross-linking agents include, but are not limited to, a compound having two or more oxazoline groups in its molecule and a compound having two or more carbodiimide groups in its molecule (polycarbodiimide-based cross-linking agent).

The proportion of the cross-linking agent to the entire of an aliphatic polyester resin composition is preferably from 0.5 to 20 percent by mass, more preferably from 1 to 15 percent by mass, and furthermore preferably from 5 to 10 percent by mass.

A foamed sheet having a constant expansion ratio can be manufactured in the range of a cross-linking agent from 0.5 to 20 percent by mass.

Other Components

The other components are nor particularly limited. A suitable component can be selected to suit to a particular application. Specific examples include, but are not limited to, a nucleating agent for foaming, a thermal stabilizer, an antioxidant, and a plasticizer.

Nucleating Agent for Foaming

Nucleating agents for foaming, also hereinafter referred to as fillers, can adjust the foam diameter and the density of a foamed sheet produced using an aliphatic polyester resin composition and enhance the crystallinity of the sheet.

The nucleating agent for foaming includes an inorganic nucleating agent and an organic nucleating agent.

Specific examples of the inorganic nucleating agent include, but are not limited to, talc, kaolin, calcium carbonate, layered silicate, zinc carbonate, wollastonite, silica, alumina, magnesium oxide, titanium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber. These can be used alone or in combination.

Specific examples of the organic nucleating agent include, but are not limited to, natural polymers such as starch, cellulose nano fiber, cellulose fine particles, wood flour, bean curd refuse, chaff, and bran, modified products thereof, glycerin compounds, sorbitol compounds, benzoic acid, and their metal salts, metal salts of phosphoric acid esters, and rosin compounds. These can be used alone or in combination.

Of these, silica, titanium oxide, and laminar silicate are preferable for efficient dispersion so that the content thereof can be reduced, thereby lessening the environmental burden.

Also, the number average along the minor axis direction of a nucleating agent for foaming is preferably 100 nm or less to increase the specific surface area per content of the nucleating agent for foaming, thereby reducing the content.

The content of a nucleating agent for foaming is not particularly limited and can be suitably selected to suit to a particular application. It is preferably three or less percent by mass to the entire of an aliphatic polyester resin composition. A content of a nucleating agent for foaming surpassing three percent by mass stiffens a foamed sheet produced using an aliphatic polyester resin composition. The foamed sheet obtained may thus be brittle.

The less the content of a non-biodegradable nucleating agent for foaming, the more preferable. Preferably, it is one or less percent by mass to the entire of an aliphatic polyester resin composition.

The aliphatic polyester resin composition of the present disclosure has a proportion of the gel portion of 5 percent or less and preferably 1 percent or less. More preferably, the aliphatic polyester resin composition is free of the gel portion.

In the present disclosure, the proportion of the gel portion is measured in the following manner.

About 1 g of a pellet of an aliphatic polyester resin composition is separated and precisely weighed. This weight is determined as m1 (g). The aliphatic polyester resin composition precisely weighed is allowed to stand in 20 mL of chloroform for two hours. The chloroform solution is filtered with a 200-mesh metallic gauze. The aliphatic polyester resin composition remaining on the metallic mesh is dried in an oven at 50 degrees C for 12 hours and precisely weighed. This weight is determined as m2 (g).

The values m1 and m2 are assigned to the relationship below to calculate the proportion of the gel portion. The calculation result obtained is rounded off and the obtained integer portion is determined as the proportion of the gel portion.

$$\text{Proportion of gel portion (percent)} = (m2/m1) \times 100$$

The upper limit of the weight average molecular weight of the aliphatic polyester resin composition of the present disclosure is not particularly limited. When the composition is used as a master batch in producing a foamed sheet, it is preferable that the cross-linking reaction progress while making the foamed sheet. The weight average molecular weight in the state of master batch is preferably 200,000 or less. The lower limit of the weight average molecular weight of the aliphatic polyester resin composition of the present disclosure is not particularly limited. When the composition is used as a master batch in producing a foamed sheet, the weight average molecular weight is preferably 100,000 or greater. This is because too a small weight average molecular weight results in an increase in the content of a cross-linking agent to achieve a high expansion ratio.

One way of measuring the weight average molecular weight Mw of an aliphatic polyester resin composition is to use gel permeation chromatography (GPC) in the following manner:
The aliphatic polyester resin composition of the present disclosure is charged in a tetrahydrofuran (THF) solution, followed by heating to 65 degrees C to dissolve polylactic acid; Next, the solution obtained is filtered with a 0.45 $\mu$m a membrane filter; and The weight average molecular weight Mw is measured in such a manner that the calibration curve created from a polystyrene sample whose molecular weight is known is determined as a reference. The weight average molecular weight Mw can also be measured based on the following measuring conditions. A column of four TSKgel SuperHM-Ns, manufactured by TOSOH CORPORATION, linked in a serial manner can be used.

Measuring Conditions

• Instrument: HLC-8320, manufactured by TOSOH CORPORATION

- Column: Four of TSKgel SuperHM-Ns, manufactured by TOSOH CORPORATION
- Detector: RI
- Measuring Temperature: 40 degrees C
- Mobile phase: Tetrahydrofuran
- Rate of flow: 0.6 mL/minute

The weight average molecular weight of the aliphatic polyester resin composition of the present disclosure after the composition is melted at 200 degrees C for 10 minutes increases by 50,000 or greater compared to that before the melting and preferably, by 100,000 or greater.

The weight average molecular weight of the aliphatic polyester resin composition before it is melted is measured according to the measuring method described above. This is referred to as Mw1. Next, the weight average molecular weight of the aliphatic polyester resin composition is measured after it is melted at 200 degrees C for 10 minutes. This is referred to as Mw2.

The increment of the weight average molecular weight can be calculated by assigning Mw1 and Mw2 to the relationship below.

$$\text{Increment } \Delta Mw \text{ of weight average molecular weight after melting} = Mw2 - Mw1$$

When the increment $\Delta Mw$ of the weight average molecular weight after the aliphatic polyester resin composition is melted at 200 degrees C for 10 minutes is 50,000 or greater, the cross-linking agent remains partially or entirely unreacted inside the aliphatic polyester resin composition. The cross-linking reaction proceeds if the aliphatic polyester resin composition is melted at high temperatures. For example, this state can be achieved by kneading an aliphatic polyester resin composition after the composition is impregnated with compressive fluid.

An aliphatic polyester resin composition as a master batch in which an unreacted cross-linking agent is uniformly dispersed in advance accelerates the cross-linking reaction while raising the temperature in manufacturing a foamed sheet. The cross-linking agent uniformly dispersed forms a cross-linking point, progressing polymerization evenly, which leads to the production of a uniform foamed sheet with a high expansion ratio.

Since a large increment $\Delta Mw$ of the weight average molecular weight gained when melted at 200 degrees C for 10 minutes is likely to demonstrate this advantage, the increment $\Delta Mw$ is preferably 100,000 or greater.

Foamed Sheet

The foamed sheet of the present disclosure is obtained by swelling the aliphatic polyester resin composition of the present disclosure. The sheet refers to a foamed aliphatic polyester resin composition.

The expansion ratio of a foamed sheet is preferably a factor of from 2 to 50, more preferably from 5 to 40, and furthermore preferably from 10 to 30. A foamed sheet with an expansion ratio under a factor of 2 is not preferable because it is strong enough but not satisfactory regarding lightweight. A foamed sheet with an expansion ratio above a factor of 20 is not preferable because it is light weighed but not strong enough.

The method of measuring the expansion ratio of a foamed sheet is not particularly limited and can be suitably selected to suit to a particular application. One way of measuring is to use a buoyancy-type specific gravity meter. Also, the expansion ratio can be obtained by measuring the bulk density and the true density of a foamed sheet and assigning them to the relationship: expansion ratio = true density of polylactic acid resin ($g/cm^3$) / bulk density of polylactic acid resin ($g/cm^3$).

Preferably, the foamed sheet of the present disclosure is substantially free of volatile components. Being substantially free of volatile components enhances the dimensional stability and reduces its impact on the human body and environment. Examples of such volatile components include, but are not limited to, organic solvents and butane as a foaming agent.

In the present disclosure, as described later, materials such as carbon dioxide ($CO_2$) used as a compressive fluid can act as foaming agents. If carbon dioxide is used as a compressive fluid, it is possible to avoid using a foaming agent containing a volatile component. A foamed sheet obtained is thus likely to be substantially free of a volatile component. "Substantially free" refers to volatile components not detectable according to the analysis described below.

A part of a foamed sheet is used as a sample. Two parts by mass of 2-propanol is added to one part by mass of the sample, followed by dispersing with an ultrasonic wave for 30 minutes. The dispersion is stored in a refrigerator at 5 degrees C for one day or longer to obtain the extract of the volatile component. The extract is analyzed utilizing gas chromatography (GC-14A, manufactured by Shimadzu Corporation) to quantify the volatile components in the foamed sheet. The measuring conditions are as follows.

Measuring Conditions

· Device: GC-14A, manufactured by Shimadzu Corporation
· Column: CBP20-M 50-0.25
· Detector: FID
· Amount of infusion: 1 to 5 μL
· Carrier gas: He 2.5 kg/cm$^2$
· Flow rate of hydrogen: 0.6 kg/cm$^2$
· Flow rate of air: 0.5 kg/cm$^2$
· Chart speed: 5 mm/min
· Sensitivity: Range 101 × Atten 20
· Column temperature: 40 degrees C
Injection Temp: 150 degrees C

Preferably, the foamed sheet of the present disclosure is substantially free of organic compounds having a boiling point of from -20 to lower than 150 degrees C at 1 atm at the measurement below.

Measuring

The foamed sheet mentioned above is partially dispersed in a solvent and the extract mentioned above is measured utilizing gas chromatography under the conditions mentioned above to quantify the organic compounds.
The foamed sheet can use a material other than an organic compound, such as $CO_2$ as a foaming agent, so that the organic compound is undetected in the foamed sheet at the measuring mentioned above, thereby substantially reducing the content of volatile components to zero percent by mass. A foamed sheet can be obtained without detecting an organic compound and handled safely without producing an odor.

Method of Manufacturing foamed sheet

The method of manufacturing the foamed sheet of the present disclosure includes kneading, foaming, and other optional processes. Kneading and foaming can be executed simultaneously or separately.

Kneading

An aliphatic polyester resin and a cross-linking agent are kneaded at temperatures lower than the melting point of the aliphatic polyester resin to obtain an aliphatic polyester resin composition.
The melt viscosity of an aliphatic polyester resin is likely to decrease sharply after the melting point. An additive kneaded is thus not readily dispersed deeply inside the resin because the additive tends to agglomerate.
An aliphatic polyester resin and a cross-linking agent kneaded at high temperatures accelerate the cross-linking reaction and polymerize the aliphatic polyester resin, raising the proportion of the gel portion in the resin composition.
By impregnating the resin with a compressive fluid, the resin and the agent can be kneaded in a highly sticky state at temperatures lower than the melting point. The cross-linking agent unreacted can be dispersed in the aliphatic polyester resin. That is, an aliphatic polyester resin is kneaded under the presence of a compressive fluid, and then an additive is added and kneaded to obtain a resin composition.
The inventors of the present invention investigated whether a compressive fluid can be used for kneading an aliphatic polyester resin composition, particularly polylactic acid and an additive. As a result, the inventors have found that, under the presence of a compressive fluid, polylactic acid can have a viscosity suitable for kneading at temperatures lower than the melting point of the polylactic acid so that additives can be evenly dispersed. Typically, polylactic acid and additives can be kneaded only when the melt viscosity is low at temperatures equal to or higher than the melting point of the polylactic acid. Conversely, according to the present disclosure, they can be kneaded at temperatures lower than the melting point using a compressive fluid, even in a highly sticky state. The dispersibility of a cross-linking agent is enhanced more.

Compressive Fluid

Specific examples of the substance that can be used as a compressive fluid include, but are not limited to, carbon monoxide, carbon dioxide, dinitrogen monoxide, nitrogen, methane, ethane, propane, 2, 3-dimethylbutane, ethylene, and dimethyl ether. Of these, carbon dioxide is preferable because it has a critical pressure of about 7.4 MPa and a critical temperature of about 31 degrees C so that it can be readily brought into a supercritical state. In addition, carbon dioxide is non-flammable and easy to handle. These compressive fluids can be used alone or in a combination of two or more thereof.

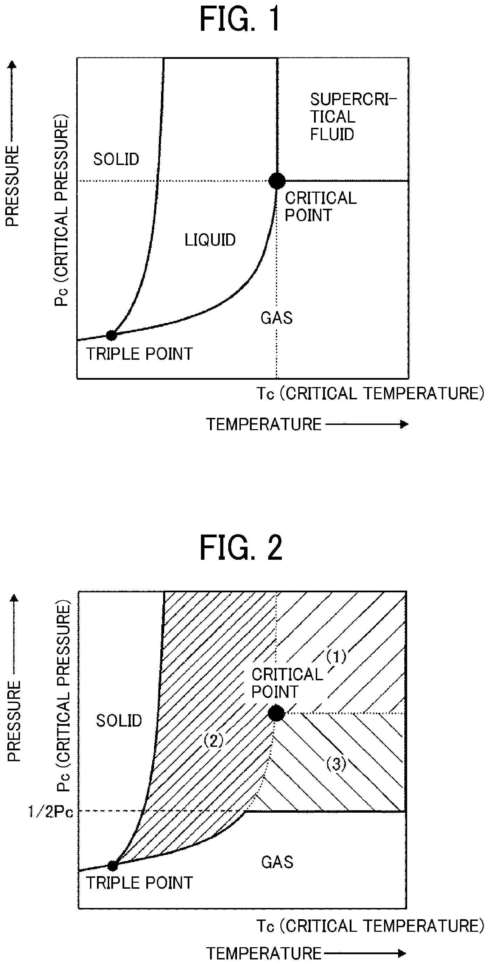

The compressive fluid used for manufacturing an aliphatic polyester resin composition is described with reference to FIGS. 1 and 2. FIG. 1 is a phase graph illustrating the state of a material against temperature and pressure. FIG. 2 is a phase graph for defining the range of compressive fluid. Compressive fluid in the present embodiment refers to the state of material being present in one of the regions of (1), (2), and (3) in FIG. 2 in the phase graph illustrated in FIG. 1.

The material has an extremely high density in these regions, known to behave differently from the state at a normal temperature and pressure. The material in the region of (1) becomes a supercritical fluid. Supercritical fluid refers to a non-compressive high-density fluid in the temperature and pressure region surpassing the limit, critical point, of coexistence of gas and liquid, being present as a fluid not condensed under compression. It also represents a liquidized gas obtained by compressing a material present as a gas at a normal temperature of 25 degrees C and a normal pressure (1 atm) while being a liquid in the region of (2). In addition, the material is a high-pressure gas having a critical pressure Pc of 1/2 (1/2 Pc) or higher while it is present as air in the region of (3).

Since the solubility of a compressive fluid varies depending on the combination of the resin type and the compressive fluid, the temperature, and the pressure, it is suitable to adjust appropriately the amount of the compressive fluid supplied.

Preferably, the content is from 2 to 30 percent by mass in the combination of polylactic acid and carbon dioxide. An amount of carbon dioxide supplied at 2 percent by mass or greater prevents limiting the plasticizing effect. An amount of carbon dioxide supplied at 30 percent by mass or less causes phase separation of carbon dioxide and polylactic acid, which is not capable of dispersing a cross-linking agent sufficiently.

Kneading Device

Kneading devices or kneaders for use in manufacturing an aliphatic polyester resin composition may employ a continuous process or batch process. The process is chosen considering the device efficiency, product features, and product quality.

Specific examples of the kneading devices or kneaders include, but are not limited to, a single-screw extruder, a multi-screw extruder, a kneader, a non-shaft basket type stirring tank, and a tubular polymerization tank equipped with a Vyborac manufactured by Sumitomo Heavy Industries, Ltd., an N-SCR manufactured by Mitsubishi Heavy Industries Ltd., a spectacle blade manufactured by Hitachi, Ltd., a lattice blade or a Kenics type, or a Sulzer type SMLX type static mixer. These devices can knead a substance at viscosity suitable for kneading. Considering the color tone, a self-cleaning polymerization device such as a finisher, an N-SCR, and a twin-screw extrusion ruder may be used. Of these, in terms of the color tone, stability, and heat resistance of resin, and production efficiency, a finisher and N-SCR are preferable.

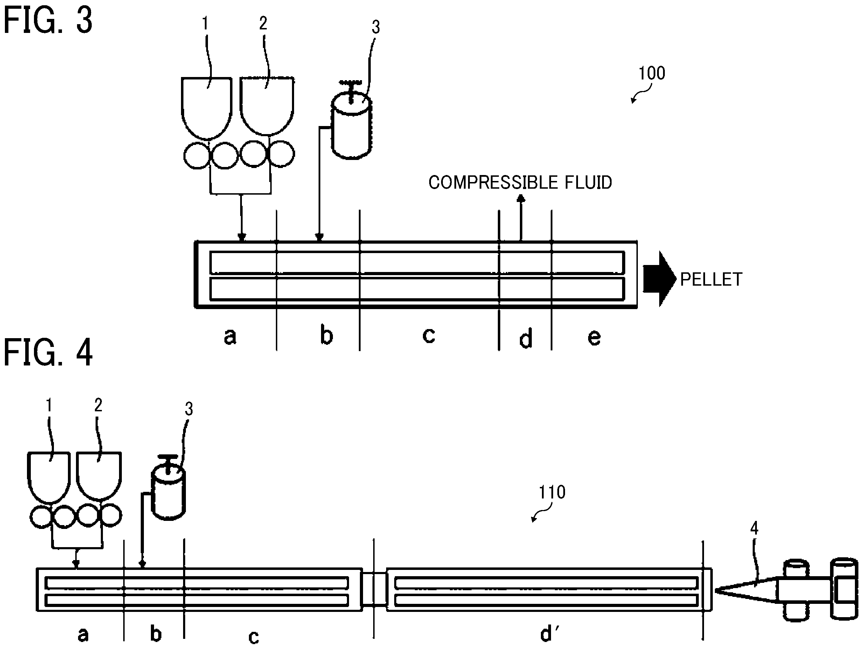

FIG. 3 is a diagram illustrating an example of the kneading device. A continuous kneading device 100 illustrated in FIG. 3 can use a twin-screw extruder, manufactured by JSW Resins B.V, for example. It can be used with a screw caliber of 42 mm and LID of 48. In this example, raw materials such as polylactic acid and a cross-linking agent are supplied from a first supplying unit 1 and a second supplying unit 2 to a raw material mixing and melting area a, followed by mixing and melting. A compressive fluid is supplied to the raw materials mixed and melted by a compressive fluid supplying unit 3 at a compressive fluid supplying area b. The resulting substance is kneaded at a kneading area c. After the compressive fluid is removed at a compressive fluid removing area d, what is obtained is changed into a substance such as a pellet at a mold-processing area e.

The aliphatic polyester resin composition produced in the manner described above can be used as a precursor for manufacturing a foamed sheet. This precursor is also referred to as a master batch. The aliphatic polyester resin composition processed to form a substance such as a pellet can be also referred to as a master batch.

The compressive fluid (liquid material) is supplied with an instrument such as a metering pump. Solid raw materials, including a resin pellet and a cross-linking agent, are supplied with an instrument such as a metering feeder.

Raw Material Mixing and Melting Area a

Resin pellets are heated at the raw material mixing and melting area a. An additive (nucleating agent for foaming) not reacted at high temperatures can be mixed with resins. The heating temperature is set to the melting point of the resin or higher than that. The resin can be thus uniformly mixed with a compressive fluid at the compressive fluid supplying area b.

Compressive Fluid Supplying Area b

Compressive fluid is supplied to the resin pellets melted and fused by heating to plasticize the melted resin.

Kneading Area c

The temperature of the kneading area c is adjusted to obtain a viscosity suitable for kneading a resin composition. The temperature can be set depending on the specifications of a reacting device, and the type, structure, and molecular weight of a resin. The temperature is thus not particularly limited and can be suitably changed. For example, a procured polylactic acid with a weight average molecular weight Mw of around 200,000 is kneaded at 10 to 20 degrees C higher than the melting point of the polylactic acid.

Conversely, in the present disclosure, polylactic acid can be kneaded at temperatures lower than the melting point thereof, although the polylactic acid has a relatively high viscosity. The temperature is not particularly limited as long as it is lower than the melting point. Preferably, it is from -30 to -80 degrees C lower than the melting point to inhibit the progress of cross-linking reaction caused by a cross-linking agent mixed in this area.

Compressive Fluid Removing Area d

In the compressive fluid area d, the compressive fluid is ejected outside by opening the pressure valve disposed at the extruder.

Mold-processing Area e

An aliphatic polyester resin composition is subjected to mold-processing to obtain an aliphatic polyester resin composition having a suitable form like a pellet in the mold-processing area e.

The pressure in each area in an extruder can be suitably changed. For example, the pressure in the compressive fluid supply area b to the compressive fluid removing area d can be set to 7 MPa.

Foaming

The aliphatic polyester resin composition mentioned above expands when being purged of the compressive fluid in the foaming process.

In the foaming process, the aliphatic polyester resin composition, polylactic acid composition, is foamed by removing the compressible fluid.

The compressive fluid is removed from a foamed sheet, slowly being replaced with air in the atmosphere. The compressive fluid can be removed if the composition is open to the atmosphere. The temperature during foaming is preferably set to be around the melting point of an aliphatic polyester resin.

In the foaming, compressive fluid dissolved in an aliphatic polyester composition mainly forms a forming nucleus at the interface with a nucleating agent for foaming against the operation of supersaturation crated by lowering the solubility of the compressive fluid by reducing the pressure and heating. The compressive fluid dissolved in the aliphatic polyester composition diffuses in the foam nucleus. The form nucleus grows to a foam, becoming a foam body. Since foaming starts from the nucleating agent for foaming, a foamed sheet with uniform and fine foams can be manufactured by uniformly dispersing the nucleating agent for foaming in polylactic acid. Without a nucleating agent for foaming, a foamed sheet with uniform and fine foams can also be produced because crystals minimally produced in the kneading area substantially act as a nucleating agent for foaming. However, the progress of excessive crystallization lowers the flowability of a composition, making it difficult to foam. It is thus preferable to add a nucleating agent for foaming.

Device for Creating Foamed Sheet

Next, foamed sheets are created using a device for creating foamed sheets. The device specified as the kneading device mentioned above can be used as the device for creating foamed sheets. The kneading device and the device for creating foamed sheets can be integrated or separated.

FIG. 4 is a diagram illustrating an example of the device for creating foamed sheets. A device 110 for continuously manufacturing foamed sheets can be a twin-screw extruder as described above. In the device 110 for manufacturing foamed sheets, raw materials such as a master batch, resin, and nucleating agent for foaming are supplied from the first supplying unit 1 and the second supplying unit 2 to the raw material mixing and melting area a, followed by mixing and melting. A compressive fluid is supplied to the raw materials mixed and melted by the compressive fluid supplying unit 3 at the compressive fluid supplying area b.

Next, the resulting substance is kneaded at the kneading area c to obtain an aliphatic polyester composition. The aliphatic polyester composition obtained is supplied to a heating area d' and heated and kneaded therein. Thereafter, the kneaded matter can be open to the atmosphere for extrusion and foaming. A foamed sheet 4 extruded and foamed is reeled up along a mandrel.

In the device 110 for continuously manufacturing foamed sheets, the raw material mixing and melting area a, the compressive fluid supplying area b, and the kneading area c are also referred to as a first extruder. The heating area d' is also referred to as the second extruder. In this example, the raw materials obtained by mixing, melting, and kneading are extruded by the first extruder to the second extruder, where foamed sheets are obtained by extrusion and expansion. One example of the second extruder is a circular die.

In this example, kneading is conducted with the kneading device and the first extruder of the device for creating foamed sheets and foaming, which is described later, is conducted with the second extruder of the device for creating foamed sheets. This configuration is not limiting in the present disclosure. Areas for kneading and foaming can be suitably changed.

Raw Material Mix-Melting Area a

Materials such as master batches, additives, and resin pellets can be mixed and heated in the raw material mixing and melting area a. The concentration of a cross-linking agent in a master batch is adjusted by adding the resin component, followed by kneading if the concentration is too high. The type of resin used is not particularly limited. The aliphatic polyester resin mentioned above can be used. Adopting the same resin as in the master batch is suitable for mixing the resin uniformly and dispersing the unreacted cross-linking agent contained therein evenly in kneading.

The additives usable are not particularly limited. These include, but are not limited to, nucleating agents for foaming, thermal stabilizer, antioxidants, and plasticizers. A cross-linking agent can be further added to the master batch, although the master batch already contains the cross-linking agent. The types of cross-linking agent and additives used are not particularly limited. The cross-linking agents and the additives of the aliphatic polyester composition mentioned above can be used. These can be used alone or in combination.

Uniform and fine foaming is expected by evenly dispersing the nucleating agent for foaming in the resin in kneading. The nucleating agent for foaming is used to adjust the foam diameter and the number density of a foamed sheet and enhance the crystallinity.

The cross-linking agent also achieves a high expansion ratio and unification of a sheet by polymerizing a resin.

To manufacture a uniform foamed sheet with a high expansion ratio, containing a nucleating agent for foaming and a cross-linking agent in the foamed sheet is preferable, considering the descriptions above.

The additive can be added any time. The nucleating agent for foaming can be added in kneading while manufacturing an aliphatic polyester composition and/or while manufacturing a foamed sheet.

The content of the cross-linking agent in a foamed sheet varies depending on the molecular weight and the molecular weight distribution of the resin used. Particularly, the content of a biodegradable resin used as the aliphatic polyester resin is preferably adjusted to 3 percent by mass or less not to impair the biodegradability.

The content of a nucleating agent for foaming in a foamed sheet is preferably adjusted to 3 parts by mass or less. A content of a nucleating agent for foaming surpassing 3 parts by mass or more may stiffen a foamed sheet, thereby making it brittle. Particularly, for a biodegradable resin used as an aliphatic polyester resin, the less the content of a nondegradable nucleating agent for foaming, the more preferable. It is more preferably 1 part by mass or less.

For a biodegradable resin used as an aliphatic polyester resin, the proportion of a biodegradable resin in the entire of the organic matter in a foamed sheet is preferably 98 or more percent by mass in terms of biodegradability and recyclability (i.e., for easy recycling). A proportion of a biodegradable resin of 98 or more percent by mass can prevent other non-biodegradable components from remaining even when and after polylactic acid is biodegraded. A proportion of a biodegradable resin of less than 98 percent by mass does not demonstrate good biodegradability.

The organic matter in a foamed sheet corresponds to the biodegradable resin such as polylactic acid, organic nucleating agents, and cross-linking agents. The organic matter does not include an inorganic nucleating agent used as a nucleating agent for foaming.

Method of Measuring Proportion of Polylactic Acid

The proportion of polylactic acid can be calculated based on the proportions of materials used. If the proportions of materials are unidentified, one way of determining the components is to compare with a known polylactic acid as a reference sample based on the GC-MS (Gas Chromatography - Mass spectrometry) analysis. Optionally, it is possible to use the spectral area ratio obtained by nuclear magnetic resonance (NMR) measuring or combine the NMR measuring with another analysis.

Measuring by GCMS Analysis

- GC-MS: QP2010, manufactured by Shimadzu Corporation, with a supplementary device, Py3030D, manufactured by Frontier Laboratories Ltd.
- Separation column: Ultra ALLOY UA5-30M-0.25F, manufactured by Frontier Laboratories Ltd.
- Heating temperature of sample: 300 degrees C
- Column oven temperature: 50 degrees C (kept for one minute), followed by raising the temperature to 320 degrees C at a temperature rising speed of 15 degrees C per minute, and kept at 320 degrees C for six minutes
- Ionization method: Electron Ionization (E.I method)
- Mass detection range: 25 to 700 (m/z)

More specifically, the proportion of polylactic acid in a foamed sheet can be obtained by, for example, analyzing utilizing GC-MS, followed by obtaining a calibration curve in advance from a known polylactic acid as a reference sample. If the organic nucleating agent is identified by searching the library of mass spectrum, a calibration curve can be created, thereby quantifying the amount to be added. Optionally, it is possible to use the spectral area ratio obtained by nuclear magnetic resonance (NMR) measuring or combine the NMR measuring with another analysis.

Compressive Fluid Supplying Area b

Compressive Fluid Used in Kneading During Manufacturing Foamed Sheet

The same compressive fluid as that mentioned above used in kneading an aliphatic polyester resin can be used during manufacturing a foamed sheet. Of these, carbon dioxide is preferable because it has a critical pressure of about 7.4 MPa and a critical temperature of about 31 degrees C so that it can be readily brought into a supercritical state. In addition, carbon dioxide is non-flammable and easy to handle. These compressive fluids can be used alone or in combination.

Compressive fluid can act as a foaming agent depending on its type. Foaming agents are used to manufacture foamed sheets. Using compressive fluid such as carbon dioxide or nitrogen as a foaming agent is preferable to produce foamed sheets because kneading and foaming are conducted in a series of processes to reduce the environmental burden.

Since the solubility of a compressive fluid varies depending on the combination of the resin type and the compressive fluid, the temperature, and the pressure, it is suitable to adjust appropriately the amount of the compressive fluid supplied. In the case of a combination of polylactic acid and carbon dioxide, the amount of carbon dioxide supplied is preferably from 2 to 30 percent by mass to 100 parts by mass of aliphatic polyester resin composition containing polylactic acid and optionally a nucleating agent for foaming and a cross-linking agent. An amount of carbon dioxide supplied at 2 percent by mass or greater prevents limiting the plasticizing effect. An amount of 30 percent by mass or less prevents the phase separation of carbon dioxide and polylactic acid, thereby obtaining a foamed sheet having a uniform thickness.

Foamed sheets containing foaming agents including an organic solvent or butane as a volatile component may harm the human body and the environment. Preferably, foamed sheets are substantially free of these volatile components. Compressive fluid such as carbon dioxide acting as a foaming agent diffuses quickly into the atmosphere after manufacturing a foamed sheet. The foamed sheet is thus likely to be substantially free of volatile components. "Substantially free" means that a volatile component is present below the detection limit according to the analysis described below.

Two parts by mass of 2-propanol is added 1 part by mass of an aliphatic polyester resin composition as a measuring target, followed by dispersion for 30 minutes using an ultrasonic wave. The mixture is stored in a refrigerator at 5 degrees C for at least one day to extract the volatile component in the aliphatic polyester resin composition.

The supernatant of the dispersion preserved is analyzed with gas chromatography (GC-14A, manufactured by Shimadzu Corporation) to quantify the volatile component in the aliphatic polyester resin composition. The measuring conditions are as follows.

Measuring Conditions

- Device: GC-14A, manufactured by Shimadzu Corporation
- Column: CBP20-M 50-0.25

- Detector: FID
- Amount of infusion: 1 to 5 $\mu$L
- Carrier gas: He 2.5 kg/cm$^2$
- Flow rate of hydrogen: 0.6 kg/cm$^2$
- Flow rate of air: 0.5 kg/cm$^2$
- Chart speed: 5mm/min
- Sensitivity: Range 101 $\times$ Atten 20
- Column temperature: 40 degrees C
- Injection Temperature: 150 degrees C

Other Foaming Agent

Foaming agents other than the compressive fluid can be used. As described above, using a compressive fluid such as carbon dioxide and nitrogen is preferable.

Specific examples of the other foaming agents include, but are not limited to, hydrocarbons such as lower alkanes such as propane, n-butane, isobutane, n-pentane, isopentane, and hexane; ethers such as dimethyl ether; halogenated hydrocarbons such as methyl chloride and ethyl chloride; and physical foaming agents including compressive gas such as carbon dioxide and nitrogen to obtain a foamed sheet with a high expansion ratio.

Other Optional Process

The other optional processes are not particularly limited and include processes executed for manufacturing a typical form sheet. They include molding, such as processing a sheet.

This molding includes, but is not limited to, vacuum forming, pressure forming, and press forming. According to the molding, a sheet product is obtained. Foamed sheets can be deformed by heating to obtain molded products.

Manufactured Matter

The foamed sheet of the present disclosure can be used as it is or as manufactured matter. The foamed sheet of the present disclosure is excellent for lightweight and heat resistance. It is suitably used as a food container and shock-absorbing sheet. It can also be used as a heat-proof food container but is not limited thereto. Text and images can be printed on the foamed sheet of the present disclosure. The foamed sheet with printed matter thereon can be used as is.

The manufactured matter using the foamed sheet of the present disclosure is not particularly limited and can be suitably changed. The manufactured matter of the present disclosure contains at least the foamed sheet of the present disclosure and, optionally, other components. The other components are not particularly limited as long as they can be used as they are as long as they are used for typical resin products and can be suitably selected to suit to a particular application.

The foamed sheet of the present disclosure can be processed to produce manufactured matter. Processing the foamed sheet is not particularly limited. For example, the sheet can be used in processing using a die to obtain a product. The processing using a die is not particularly limited. A typical method of thermoplastic resin can be used, including vacuum molding, pressure forming, vacuum pressure forming, and press molding.

Specific examples of the manufactured matter, also referred to as consumer products, include, but are not limited to, food containers, shock-absorbing sheets, cutlery, bags, packaging containers, stationery, trays, plates, and commodities. The concept of this manufactured matter includes not only a product itself but also a part like the handle of a tray and a product equipped with manufactured matter such as a tray with a handle.

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

Synthesis Example 1

Synthesis of Aliphatic Polyester Resin A

First, 1,4-butanediol as a diol and dodecanedioic acid as a dicarboxylic acid were placed in a 5 L four-necked flask equipped with a nitrogen introducing tube, a dehydrating tube, a stirrer, and a thermocouple to achieve a OH to COOH molar ratio of diol to dicarboxylic acid of 1.02:1. Subsequent to sufficient replacement with nitrogen gas in the flask, 300 ppm (based on the monomer) of titanium tetraisopropoxide was added. The temperature was thereafter raised to 200 degrees C in about four hours in a nitrogen atmosphere. The temperature was then raised to 230 degrees C in two hours to allow the reaction until no liquid effluent was produced any more. Thereafter, the resulting substance was allowed to react for four hours under a reduced pressure of from 10 to 30 mm Hg to obtain a crystalline aliphatic polyester resin A.

The aliphatic polyester resin A obtained had a melting point Tm of 72.9 degrees C and a weight average molecular weight Mw of 48,600.

Example 1

Preparation of Master Batch 1

Using the continuous kneading device 100 illustrated in FIG. 3, polylactic acid resin and an epoxy-based cross-linking agent were supplied to the raw material mixing and melting area a to achieve the entire flow rate of the resin and the agent of 10 kg/h.

Specifically, 9.0 kg/h of polylactic (Revode 110, melting point of 160 degrees C, manufactured by Zhejiang Hisun Biomaterials Co., Ltd.), 1.0 kg/h of epoxy-based cross-linking agent (Joncryl ADR 4368C, manufactured by BASF SE), 0.90 kg/h of carbon dioxide as a compressive fluid were supplied to the compressive fluid supplying area b, followed by kneading in the kneading area c to obtain a polylactic acid composition containing epoxy-based cross-linking agent at 10 percent by mass. Next, the compressive fluid in the polylactic acid composition was exhausted in the compressive fluid removing area d. The polylactic acid composition containing epoxy-based cross-linking agent at 10 percent by mass was extruded in a strand manner in the mold-processing area e and cooled down, followed by peletizing with a cutter. The master batch 1 (MB1) of the polylactic acid composition of Example 1 was thus obtained.

The temperatures in the raw material mixing and melting area a, the compressive fluid supplying area b, the kneading area c, the compressive fluid removing area d, and the mold-processing area e were respectively 190 degrees C, 190 degrees C, 150 degrees C, 190 degrees C, and 190 degrees C.

The pressures in the compressive fluid supplying area b, the kneading area c, and the compressive fluid removing area d were respectively 7.0 MPa, 7.0 MPa, and 0.5 MPa.

Examples 2 to 6, and 8 and Comparative Examples 1 to 3

Master Batches 2 to 6, 8, 9, and 11

Master batches 2 to 6, 8, 9, and 11 (MB2 to MB6, MB8, MB9, and MB11) were prepared in the same manner as in Example 1 except that corresponding materials were adjusted in accordance with the prescriptions shown in Tables 1-1 and 1-2 while keeping the entire flow rate of the aliphatic polyester resin and the cross-linking agent of 10 kg/h.

Example 7

Preparation of Master Batch 7

The master batch 7 (MB7) was prepared in the same manner as in Example 1 except that the aliphatic polyester resin A (non-biodegradable) of Synthesis Example 1 was used as a raw material and the temperatures in the raw material mixing and melting area a, the compressive fluid supplying area b, the kneading area c, the compressive fluid removing area d, and the mold-processing area e were respectively set to 100 degrees C, 100 degrees C, 40 degrees C, 100 degrees C, and 100 degrees C.

Comparative Example 2

Preparation of Master Batch 10

The master batch 10 (MB 10) was prepared in the same manner as in Example 1 except that no compressive fluid was used and the temperatures in the raw material mixing and melting area a, the compressive fluid supplying area b, the kneading area c, the compressive fluid removing area d, and the mold-processing area e were all set to 200 degrees C.

Next, the properties of the obtained master batches 1 to 11 (MB1 to MB11) were measured as follows. The results are shown in Tables 1-1 and 1-2.

Apparent Epoxy Equivalent

The apparent epoxy equivalent was calculated based on the proportions of materials used according to the following method.

The apparent epoxy equivalent refers to an aliphatic polyester composition's weight (g/mol) containing epoxy groups equivalent to 1 mol. For example, the aliphatic polyester composition produced by kneading an epoxy-based cross-linking agent with an epoxy equivalent of x (g/mol) to achieve a proportion of the agent of 1 percent by mass has an apparent epoxy equivalent of 100x (g/mol).

Increment ΔMw of Weight Average Molecular Weight of Aliphatic Polyester Resin Composition after Melted for 10 Minutes at 200 Degrees C

The weight average molecular weight Mw of an aliphatic polyester resin composition was measured in the following manner utilizing a gel permeation chromatography (GPC).

The aliphatic polyester resin composition of the present disclosure was charged in a tetrahydrofuran (THF) solution, followed by heating to 65 degrees C to dissolve polylactic acid. Next, the solution obtained was filtered with a 0.45 μm a membrane filter. The weight average molecular weight Mw was measured in such a manner that the calibration curve created from a polystyrene sample whose molecular weight was known was determined as a reference. The weight average molecular weight Mw was measured based on the following measuring conditions. The column of four TSKgel SuperHM-Ns, manufactured by TOSOH CORPORATION, linked in a serial manner was used.

Measuring Conditions

- Instrument: HLC-8320 (manufactured by TOSOH CORPORATION)
- Column: Four of TSKgel SuperHM-Ns, manufactured by TOSOH CORPORATION
- Detector: R1
- Measuring Temperature: 40 degrees C
- Mobile phase: Tetrahydrofuran
- Rate of flow: 0.6 mL/minute

The weight average molecular weight of the aliphatic polyester resin composition before it was melted was measured according to the method of measuring a weight average molecular weight described above. This is referred to as Mw1. Next, the weight average molecular weight of the aliphatic polyester resin composition was measured after it was melted at 200 degrees C for 10 minutes. This is referred to as Mw2. The increment of the weight average molecular weight was calculated by assigning Mw1 and Mw2 to the relationship below.

$$\text{Increment } \Delta\text{Mw of weight average molecular weight after melting} = \text{Mw2} - \text{Mw1}$$

Proportion of Gel Portion

About 1 g of the aliphatic polyester resin composition was taken out separately and precisely weighed. This weight is determined as m1 (g). The aliphatic polyester resin composition precisely weighed was allowed to stand in 20 mL of chloroform for two hours. The chloroform solution was filtered with a 200-mesh metallic gauze. The aliphatic polyester resin composition remaining on the metallic mesh was dried in an oven at 50 degrees C for 12 hours and precisely weighed. This weight is determined as m2 (g).

The values m1 and m2 are assigned to the relationship below to calculate the proportion of the gel portion. The calculation result obtained was rounded off and the obtained integer portion was determined as the proportion of the gel portion.

$$\text{Proportion of gel portion (percent)} = (m2/m1) \times 100$$

Table 1-1

| | | | Example | | | | | |
|---|---|---|---|---|---|---|---|---|
| | | | 1 | 2 | 3 | 4 | 5 | 6 |
| | | | MB1 | MB2 | MB3 | MB4 | MB5 | MB6 |
| Aliphatic polyester resin | Biodegradability | Revode110, manufactured by Zhejiang Hisun Biomaterials Co., Ltd. | 90 | | | 90 | 90 | 99 |
| | | Revode190, manufactured by Zhejiang Hisun Biomaterials Co., Ltd. | | 90 | | | | |
| | | LX175, manufactured by TotalEnergies Corbion | | | 95 | | | |
| | Non-biodegradability | Aliphatic polyester resin A of Synthesis 1 | | | | | | |
| Cross-linking agent | Epoxy-based | Joncryl ADR-4468, manufactured by BASF SE | 10 | 10 | 5 | | | 1 |
| | Carbodiimide-based | Carbosista® TCC-NP, manufactured by TEIJIN LIMITED | | | | 10 | | |
| | Isocyanate-based | DURANATE™ TPA-100, manufactured by Asahi Kasei Corporation | | | | | 10 | |
| Measuring result | Apparent epoxy equivalent (g/mol) | | 3100 | 3100 | 6200 | - | - | 31000 |
| | ΔMw | | 159000 | 162100 | 80100 | 61200 | 74200 | 132400 |
| | Proportion of gel portion (percent) | | 0 | 0 | 0 | 0 | 0 | 0 |

Table 1-2

| | | | Example | | Comparative Example | | |
|---|---|---|---|---|---|---|---|
| | | | 7 | 8 | 1 | 2 | 3 |
| | | | MB7 | MB8 | MB9 | MB10 | MB11 |
| Aliphatic polyester resin | Biodegradability | Revode110, manufactured by Zhejiang Hisun Biomaterials Co., Ltd. | | 85 | 100 | 90 | 99.75 |
| | | Revode190, manufactured by Zhejiang Hisun Biomaterials Co., Ltd. | | | | | |
| | | LX175, manufactured by TotalEnergies Corbion | | | | | |
| | Non-biodegradability | Aliphatic polyester resin A of Synthesis 1 | 90 | | | | |
| Cross-linking agent | Epoxy-based | Joncryl ADR-4468, manufactured by BASF SE | 10 | 15 | | 10 | 0.25 |
| | Carbodiimide-based | Carbosista® TCC-NP | | | | | |
| | Isocyanate-based | DURANATE™ TPA-100, manufactured by Asahi Kasei Corporation | | | | | |
| Measuring result | Apparent epoxy equivalent (g/mol) | | 3100 | 2067 | 0 | 3100 | 124000 |
| | ΔMw | | 69500 | 152600 | 0 | 32000 | 44200 |
| | Proportion of gel portion (percent) | | 0 | 2 | 0 | 6 | 0 |

Example 9

Manufacturing of Foamed Sheet 1

Using the device 110 for continuously manufacturing foamed sheets illustrated in FIG. 4, 1.0 kg/h of the master batch 1, 9.0 Kg/h of polylactic acid (REVODE 110, manufactured by Zhejiang Hisun Biomaterials Co., Ltd.) were supplied to the raw material mixing and melting area a of the first extruder to achieve the proportion of the cross-linking agent of 1 percent by mass to the entire of the polylactic acid and the cross-linking agent.

Thereafter, surface-treated silica (R972, manufactured by Nippon Aerosil Co., Ltd.) as a nucleating agent for foaming was supplied at 0.05 kg/h (equivalent to 0.5 parts by mass to 100 parts by mass of the entire of polylactic acid and cross-linking agent) to the raw material mixing and melting area a of the first extruder.

Next, carbon dioxide at 0.99 kg/h (equivalent to 10 percent by mass to the entire of polylactic acid, nucleating agent for foaming, and cross-linking agent) was supplied to the compressive fluid supplying area b of the first extruder. These materials were mixed, melted, and kneaded. The melt-kneaded matter was supplied to the second extruder.

Next, the second extruder kneaded the matter at the heating area d' to obtain a polylactic acid composition. Then the second extruder discharged the polylactic acid composition at 10 kg/h through the circular die with a slit calibrator of 70 mm mounted on the front end of the second extruder. The resin polylactic acid component was cooled down to 130 degrees C, followed by opening to the atmosphere for extrusion and expansion. While the tubular polylactic acid resin foamed sheet extruded and expanded was placed along a cooled mandrel, the exterior was cooled down by blowing air from an air ring. The sheet was cut open with a rotary blade cutter to obtain a flat sheet-like foam product. The foamed sheet 1 was thus obtained.

The temperatures in each area were as follows:

The raw material mixing and melting area a: 190 degrees C

The compressive fluid supplying area b of the first extruder: 190 degrees C
The kneading area c of the first extruder: 150 degrees C
The heating area d' of the second extruder: 130 degrees C

The pressure applied in each area was as follows:

The compressive fluid supplying area b of the first extruder: 7.0 MPa
The kneading area c of the first extruder: 7.0 MPa
The heating area d' of the second extruder: 7.0 MPa

Examples 10 to 16 and 18 and Comparative Examples 4 to 6

Manufacturing of Foamed Sheets 2 to 8 and 10 to 13

The foamed sheets 2 to 8 and 10 to 13 were manufactured in the same manner as in Example 9 except that the flow rates of the master batch and polylactic acid were adjusted considering the proportion of the cross-linking agent in each of the master batches, while maintaining the proportion of the cross-linking agent of 1 percent by mass to the entire of the aliphatic polyester resin and the cross-linking agent.
Since the proportion of the cross-linking agent in each of the master batches 9 and 11 was less than 1 percent by mass, the epoxy-based cross-linking agent (Joncryl ADR4368C, manufactured by BASF SE) and the nucleating agent for foaming as an additive were added at the same time to obtain the foamed sheets 11 and 13.
Since the proportion of the cross-linking agent in the master batch 6 was 1 percent by mass, the foamed sheet 6 was obtained without adding polylactic acid.

Example 17

Manufacturing of Foamed Sheet 9

The foamed sheet 9 was prepared in the same manner as in Example 9 except that the compressive fluid was changed from carbon dioxide to butane.
Each of the foamed sheets obtained was evaluated on the expansion ratio, uniformity, biodegradability, and content of volatile components. The results are shown in Tables 2-1 and 2-2.

Expansion Ratio

The expansion ratio of the foamed sheet was obtained in the following manner.

Bulk Density

The foamed sheet was allowed to stand at 23 degrees C and a relative humidity of 50 percent for 24 hours or longer, followed by cutting out a test piece of 50 mm $\times$ 50 mm. The bulk density of the test piece cut out was obtained with an automatic specific gravity meter (DSG-1, manufactured by Toyo Seiki Seisaku-sho, Ltd.) according to hydrometry. In this method, the bulk density was calculated from the following relationship after the weight (g) of the foamed sheet in the atmosphere was precisely weighed and then the weight (g) of the foamed sheet in water was precisely weighed.

$$\text{Bulk density (g/cm}^3) = \text{weight (g) of sample in atmosphere} / \{(\text{weight (g) of sample in atmosphere - weight (g) of sample in liquid)} \times \text{liquid density (g/cm}^3)$$

Calculation of Expansion Ratio

The expansion ratio of the foamed sheet was obtained from the following relationship. The true density of the foamed sheet was obtained by using the true density of 1.25 g/cm$^3$ of the polylactic acid resin as the main resin

$$\text{Expansion ratio} = \text{true density of 1.25 (g/cm}^3) / \text{bulk density (g/cm}^3)$$

A small bulk density means a large expansion ratio. As the expansion ratio increases, the weight of a molded product decreases if its form is the same. This is preferable in terms of cost and resource saving. Expansion ratio was evaluated according to the following criteria.

Evaluation Criteria

S: Factor of 20 or greater
A: Factor of 10 to less than 20
B: Factor of 5 to less than 10
C: Less than factor of 5

Uniformity

The uniformity of the foamed sheet was evaluated in the following manner.

The obtained foamed sheet was cut with a blade (76, manufactured by NISSIN EM CO., LTD.) and the cross section of the foamed sheet was observed with a scanning electron microscope (SEM), VE-9800, manufactured by KEYENCE CORPORATION. Three SEM photos of the cross section obtained at a factor of 50 was binarized to the gray portions corresponding to foams and the white portion corresponding to the resin portion utilizing an image analysis software named Image-Pro Premier, created by Media Cybernetics, Inc. The uniformity was evaluated for these photos according to the following criteria.

Evaluation Criteria

A: The foam diameters in the entire field of view are uniform for all the three photos
B: Foams are present overall in the three photos but coarse foams and fine foams are also present, resulting in non-uniformity of the foam diameter
C: Portions not foamed are present in at least one photo

Biodegradability

The biodegradability of the foamed sheets was obtained according to JISK6953-2 format and evaluated according to the following criteria

Evaluation Criteria

A: Biodegraded 60 or more percent in six months
C: Biodegraded less than 60 percent in six months

Content of Volatile Component

The foamed sheet was cut out to 5 mm square, which was used as a sample. Two parts by mass of 2-propanol was added to one part by mass of the sample, followed by dispersing with ultrasonic wave for 30 minutes. The dispersion was stored in a refrigerator at 5 degrees C for one day or longer to obtain the extract of the volatile components with 2-propanol. The extract of the volatile components with 2-propanol was analyzed utilizing gas chromatography (GC-14A, manufactured by Shimadzu Corporation) to quantify the volatile components in the foamed sheet. The measuring method is as follows.

Measuring Conditions

- Device: GC-14A, manufactured by Shimadzu Corporation
- Column: CBP20-M 50-0.25

- Detector: FID
- Amount of infusion: 1 to 5 $\mu$L
- Carrier gas: He 2.5 kg/cm$^2$
- Flow rate of hydrogen: 0.6 kg/cm$^2$
- Flow rate of air: 0.5 kg/cm$^2$
- Chart speed: 5mm/min
- Sensitivity: Range 101 $\times$ Atten 20
- Column temperature: 40 degrees C
- Injection Temperature: 150 degrees C

The content of the volatile component was measured according to the method described above and evaluated according to the following criteria.

Evaluation Criteria

A: Below detection limit (substantially free of volatile components)
B: Volatile components detected

Table 2-1

| | Example | | | | | | |
|---|---|---|---|---|---|---|---|
| | 9 | 10 | 11 | 12 | 13 | 14 | 15 |
| Foamed sheet No. | 1 | 2 | 3 | 4 | 5 | 6 | 7 |
| Master batch No. | MB1 | MB2 | MB3 | MB4 | MB5 | MB6 | MB7 |
| Nucleating agent for foaming: Content (parts by mass) of silica (R972, manufactured by Evonik Industries AG | 0.5 | 0.5 | 0.5 | 0.5 | 0.5 | 0.5 | 0.5 |
| Foaming agent | $CO_2$ | $CO_2$ | $CO_2$ | $CO_2$ | $CO_2$ | $CO_2$ | $CO_2$ |
| Content (percent by mass) of cross-linking agent in master batch | 10 | 10 | 10 | 5 | 10 | 10 | 1 |
| Content (percent by mass) of cross-linking agent *1 | 1 | 1 | 1 | 1 | 1 | 1 | 1 |
| Bulk density (g/cm$^3$) | 0.042 | 0.051 | 0.080 | 0.189 | 0.172 | 0.079 | 0.061 |
| Evaluation on expansion ratio | S | S | A | B | B | A | S |
| Evaluation on uniformity | A | A | A | B | B | B | A |
| Evaluation on biodegradability | A | A | A | A | A | A | C |
| Evaluation on content of volatile component | A | A | A | A | A | A | A |
| * 1: Content (percent by mass) of cross-linking agent when organic component (resin + cross-linking agent) in a foamed sheet is defined as 100 percent by mass | | | | | | | |

Table 2-2

| | Example | | | Comparative Example | | |
|---|---|---|---|---|---|---|
| | 16 | 17 | 18 | 4 | 5 | 6 |
| Foamed sheet No. | 8 | 9 | 10 | 11 | 12 | 13 |
| Master batch No. | MB8 | MB1 | MB1 | MB9 | MB10 | MB11 |

(continued)

|  | Example | | | Comparative Example | | |
|---|---|---|---|---|---|---|
|  | 16 | 17 | 18 | 4 | 5 | 6 |
| Nucleating agent for foaming: Content (parts by mass) of silica (R972, manufactured by Evonik Industries AG | 0.5 | 0.5 | 0 | 0.5 | 0.5 | 0.5 |
| Foaming agent | $CO_2$ | Butane | $CO_2$ | $CO_2$ | $CO_2$ | $CO_2$ |
| Content (percent by mass) of cross-linking agent in master batch | 15 | 10 | 10 | 0 | 10 | 0.25 |
| Content (percent by mass) of cross-linking agent *1 | 1 | 1 | 1 | 1 | 1 | 1 |
| Bulk density (g/cm$^3$) | 0.049 | 0.051 | 0.071 | 0.124 | 0.321 | 0.168 |
| Evaluation of expansion ratio | S | S | A | A | C | B |
| Evaluation on uniformity | A | A | A | C | C | C |
| Evaluation on biodegradability | A | A | A | A | A | A |
| Evaluation on content of volatile component | A | C butane detected | A | A | A | A |
| * 1: Content (percent by mass) of cross-linking agent when organic component (resin + cross-linking agent) in a foamed sheet is defined as 100 percent by mass | | | | | | |

Aspects of the present disclosure are, for example, as follows.

1. An aliphatic polyester resin composition contains an aliphatic polyester resin and a cross-linking agent, wherein the proportion of a gel proportion of the aliphatic polyester resin composition is less than 5 percent, wherein the weight average molecular weight of the aliphatic polyester resin composition after the aliphatic polyester resin composition is melted at 200 degrees C for 10 minutes increases by 50,000 or greater compared to the weight average molecular weight of the aliphatic polyester resin composition before the aliphatic polyester resin composition is melted at 200 degrees C for 10 minutes.

2. The aliphatic polyester resin composition according to 1 mentioned above, wherein the weight average molecular weight of the aliphatic polyester resin composition after the aliphatic polyester resin composition is melted at 200 degrees C for 10 minutes increases by 100,000 or greater compared to the weight average molecular weight of the aliphatic polyester resin composition before the aliphatic polyester resin composition is melted at 200 degrees C for 10 minutes.

3. The aliphatic polyester resin composition according to 1 or 2 mentioned above, wherein the cross-linking agent contains at least one member selected from the group consisting of an epoxy compound and an isocyanate compound.

4. The aliphatic polyester resin composition according to 3 mentioned above, wherein the cross-linking agent is the epoxy compound.

5. The aliphatic polyester resin composition according to 4 mentioned above, wherein the apparent epoxy equivalent of the aliphatic polyester resin composition is 30,000 g/mol or less after the aliphatic polyester resin composition is melted at 200 degrees C for 10 minutes.

6. The aliphatic polyester resin composition according to any one of 1 to 5 mentioned above, wherein the aliphatic polyester resin contains a polylactic acid.

7. The aliphatic polyester resin composition according to 6 mentioned above, wherein the proportion of the polylactic acid is 90 percent by mass or greater.

8. The aliphatic polyester resin composition according to any one of 1 to 7 mentioned above, wherein the aliphatic polyester resin is used as a master batch of a foamed sheet of the aliphatic polyester resin.

9. A foamed sheet obtained by foaming the aliphatic polyester resin composition of any one of 1 to 8 mentioned above.

10. A method of manufacturing the foamed sheet of 9 mentioned above includes kneading the aliphatic polyester resin and the cross-linking agent at a temperature lower than a melting point of the aliphatic polyester resin under the presence of a compressive fluid to obtain the aliphatic polyester resin composition and foaming the aliphatic polyester resin composition in removing the compressive fluid from the aliphatic polyester resin composition.

11. The method according to 10 mentioned above, wherein the compressive fluid is carbon dioxide.

12. Manufactured matter includes the foamed sheet of 9 mentioned above.

13. The manufactured matter according to 12 mentioned above, wherein the manufactured matter is a food container or a shock-absorbing sheet.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1. An aliphatic polyester resin composition comprising:

   an aliphatic polyester resin; and
   a cross-linking agent,
   wherein a proportion of a gel proportion of the aliphatic polyester resin composition is less than 5 percent,
   wherein a weight average molecular weight of the aliphatic polyester resin composition after the aliphatic polyester resin composition is melted at 200 degrees C for 10 minutes increases by 50,000 or greater compared to the weight average molecular weight of the aliphatic polyester resin composition before the aliphatic polyester resin composition is melted at 200 degrees C for 10 minutes.

2. The aliphatic polyester resin composition according to claim 1,
   wherein the weight average molecular weight of the aliphatic polyester resin composition after the aliphatic polyester resin composition is melted at 200 degrees C for 10 minutes increases by 100,000 or greater compared to the weight average molecular weight of the aliphatic polyester resin composition before the aliphatic polyester resin composition is melted at 200 degrees C for 10 minutes.

3. The aliphatic polyester resin composition according to claim 1 or 2, wherein the cross-linking agent comprises at least one member selected from the group consisting of an epoxy compound and an isocyanate compound.

4. The aliphatic polyester resin composition according to claim 3, wherein the cross-linking agent is the epoxy compound.

5. The aliphatic polyester resin composition according to claim 4, wherein an apparent epoxy equivalent of the aliphatic polyester resin composition is 30,000 g/mol or less after the aliphatic polyester resin composition is melted at 200 degrees C for 10 minutes.

6. The aliphatic polyester resin composition according to any one of claims 1 to 5, wherein the aliphatic polyester resin comprises a polylactic acid.

7. The aliphatic polyester resin composition according to claim 6, wherein a proportion of the polylactic acid is 90 percent by mass or greater.

8. The aliphatic polyester resin composition according to any one of claims 1 to 7, wherein the aliphatic polyester resin is used as a master batch of a foamed sheet of the aliphatic polyester resin.

9. A foamed sheet (4) obtained by foaming the aliphatic polyester resin composition of any one of claims 1 to 8.

10. A method of manufacturing the foamed sheet of claim 9, comprising:

    kneading the aliphatic polyester resin and the cross-linking agent at a temperature lower than a melting point of the aliphatic polyester resin under a presence of a compressive fluid to obtain the aliphatic polyester resin composition; and
    foaming the aliphatic polyester resin composition in removing the compressive fluid from the aliphatic polyester resin composition.

**11.** The method according to claim 10, wherein the compressive fluid is carbon dioxide.

**12.** Manufactured matter comprising:
the foamed sheet (4) of claim 9.

**13.** The manufactured matter according to claim 12, wherein the manufactured matter is a food container or a shock-absorbing sheet.

# FIG. 1

# FIG. 2

FIG. 3

FIG. 4

# FIG. 5

RAW MATERIAL     $CO_2$ SUPPLY

TWIN-SCREW KNEADER → SINGLE-SCREW KNEADER → DIE → FOAMED SHEET

Europäisches
Patentamt

European
Patent Office

Office européen
des brevets

## EUROPEAN SEARCH REPORT

Application Number

EP 23 15 8766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/152388 A1 (RICOH CO LTD [JP]; NEMOTO TAICHI [JP]; NOZAKI CHIYOSHI [JP]) 5 August 2021 (2021-08-05) * paragraphs [0040] – [0042]; example 10 * ----- | 1-13 | INV. C08J9/00 C08J9/12 C08L67/04 C08J9/14 |
| X | JP 2007 145361 A (TORAY INDUSTRIES) 14 June 2007 (2007-06-14) * paragraph [0022]; example 12; table 1 * ----- | 1-6,8-13 | C08G18/42 C08G59/42 |
| X | KR 2015 0139114 A (LG HAUSYS LTD [KR]) 11 December 2015 (2015-12-11) * example 1; table 1 * ----- | 1-7 | |
| X | JP H04 189822 A (SHOWA HIGHPOLYMER) 8 July 1992 (1992-07-08) * figures 2A-2B; examples 1-2 * ----- | 1,3 | |
| X | US 5 714 569 A (IMAIZUMI MITSUHIRO [JP] ET AL) 3 February 1998 (1998-02-03) * example 1 * ----- | 1-3 | |

| | TECHNICAL FIELDS SEARCHED (IPC) |
|---|---|
| | C08J C09J C08L C08G |

The present search report has been drawn up for all claims

| Place of search | Date of completion of the search | Examiner |
|---|---|---|
| The Hague | 18 July 2023 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8766

This annex lists the patent family members relating to the patent documents cited in  the above-mentioned European search report.
The members are as contained in the European Patent Office EDP file on
The European Patent Office is in no way liable for these particulars which are merely given for the purpose of information.

18-07-2023

| Patent document cited in search report | | Publication date | Patent family member(s) | | Publication date |
|---|---|---|---|---|---|
| WO 2021152388 | A1 | 05-08-2021 | CN 115003738 | A | 02-09-2022 |
| | | | EP 4097171 | A1 | 07-12-2022 |
| | | | US 2023076268 | A1 | 09-03-2023 |
| | | | WO 2021152388 | A1 | 05-08-2021 |
| JP 2007145361 | A | 14-06-2007 | NONE | | |
| KR 20150139114 | A | 11-12-2015 | NONE | | |
| JP H04189822 | A | 08-07-1992 | JP 2825969 | B2 | 18-11-1998 |
| | | | JP H04189822 | A | 08-07-1992 |
| US 5714569 | A | 03-02-1998 | AU 694832 | B2 | 30-07-1998 |
| | | | CA 2183737 | A1 | 27-06-1996 |
| | | | DE 69533745 | T2 | 27-10-2005 |
| | | | EP 0747416 | A1 | 11-12-1996 |
| | | | FI 963254 | A | 18-10-1996 |
| | | | JP 3434517 | B2 | 11-08-2003 |
| | | | KR 970701221 | A | 17-03-1997 |
| | | | KR 20040053172 | A | 23-06-2004 |
| | | | TW 303375 | B | 21-04-1997 |
| | | | US 5714569 | A | 03-02-1998 |
| | | | WO 9619521 | A1 | 27-06-1996 |

EPO FORM P0459

For more details about this annex : see Official Journal of the European Patent Office, No. 12/82

**REFERENCES CITED IN THE DESCRIPTION**

**Patent documents cited in the description**

- JP 2020180252 A